# EUROPÄISCHE PATENTSCHRIFT

(11) **EP 2 454 043 B1**
(45) Veröffentlichungstag und Bekanntmachung des Hinweises auf die Patenterteilung: **20.12.2017**
(21) Anmeldenummer: 10730373.7
(22) Anmeldetag: 02.07.2010
(51) Int. Cl.: B23B 51/02

(54) **BOHRER**
DRILL
FORET

(30) Priorität: 14.07.2009 DE 102009033942
(43) Veröffentlichungstag der Anmeldung: 23.05.2012
(73) Patentinhaber: MAPAL Fabrik für Präzisionswerkzeuge Dr. Kress KG, 73431 Aalen (DE)
(72) Erfinder: KRESS, Dieter, 73431 Aalen (DE)
(74) Vertreter: Gleiss, Alf-Olav
(86) Internationale Anmeldenummer: PCT/EP2010/003993
(87) Internationale Veröffentlichungsnummer: WO 2011/006587

(56) Entgegenhaltungen:
- EP-A1- 0 045 726
- DE-U1- 20 211 589
- FR-A- 1 274 316
- JP-U- S62 138 519
- US-A1- 2003 017 015

## Beschreibung

Die Erfindung betrifft einen Bohrer zur Herstellung von Bohrungen in faserverstärkten Kunststoffe aufweisenden Werkstücken, gemäß Oberbegriff des Anspruchs 1.

DE 202 11 589 U1 offenbart einen Bohrer gemäß dem Oberbegriff des Anspruchs 1. Bei der Bearbeitung von Werkstoffen, welche faserverstärkten, beispielsweise glasfaserverstärkten oder kohlefaserverstärkten Kunststoff aufweisen, kommt es unter anderem darauf an, dass an den Schnittkanten die Fasern sauber geschnitten und nicht aus dem Werkstoffverbund herausgerissen werden. Unsaubere, das heißt ausgefranste Kanten mit hervorstehenden Fasern erfordern einen hohen Aufwand und damit hohe Kosten für Nacharbeiten oder können die bearbeiteten Werkstücke sogar unbrauchbar machen. Beim Bohren von derartigen Werkstoffen, kommt es insbesondere am Bohrungsaustritt, also dort, wo der Bohrer durch das Werkstück hindurchdringt, zu ausgefransten Kanten, einer sogenannten Delamination, was beispielsweise bei Nietlochbohrungen in Strukturteilen im Flugzeugbau sehr störend ist.

Aus der DE 202 09 768 U1 geht ein Bohrer der hier angesprochenen Art hervor. Dieser weist an seiner Stirnseite zwei Hauptschneiden auf, die in an dem Umfangsbereich des Bohrers vorgesehenen Nebenschneiden übergehen. Die Hauptschneiden werden durch aneinandergrenzende Span- und Freiflächen gebildet. Auf den Spanflächen laufen die von der Hauptschneide abgetragenen Späne ab. Im Bereich der Mittelachse des Bohrers ist hier eine Querschneide vorgesehen, an welche die beiden stirnseitigen Hauptschneiden angrenzen. Im Bereich einer Umfangsfläche des Bohrers sind Nebenschneiden mit positivem Spanwinkel vorgesehen, wobei jeder Hauptschneide eine Nebenschneide zugeordnet ist. Um eine Delamination zu verhindern, auch bei Bearbeitung härterer Schichten des Werkstücks, weist der Bohrer im Bereich seiner Spitze einen durchmesserkleineren Vorbohrabschnitt und einen entgegen der Vorschubrichtung des Bohrers nachfolgenden, durchmessergrößeren Feinbearbeitungsabschnitt auf. An die am Feinbearbeitungsabschnitt vorgesehenen Nebenschneiden schließen sich umfangsseitig Rundschlifffasen an, die der zentrierenden Abstützung des Bohrers an der Bohrungswand während des Bohrvorgangs dienen. Die Breite der Rundschlifffasen steigt mit größer werdendem Abstand von den Hauptschneiden linear an. Nachteilig ist, dass das Bohrergebnis nicht in allen Fällen den Anforderungen hinsichtlich der Oberflächengüte der Bohrungswand und der Formgenauigkeit der Bohrung entspricht und daher verbesserungswürdig ist. Ferner sind der Aufwand und damit die Kosten bei der Herstellung des Bohrers relativ hoch.

Der Erfindung liegt daher die Aufgabe zugrunde, einen Bohrer der eingangs genannten Art zu schaffen, der in faserverstärkten Kunststoffen insbesondere auch am Bohrungsaustritt keine Delamination, also kein Herauslösen von Fasern, verursacht und mittels dessen gleichwohl genaue Bohrungen und gute Oberflächengüten der Bohrungswand erzeugt werden können.

Zur Lösung dieser Aufgabe wird ein Bohrer vorgeschlagen, welcher die in Anspruch 1 genannten Merkmale aufweist. Dieser Bohrer umfasst mindestens eine stirnseitige Hauptschneide, an die sich im Bereich der Umfangsfläche des Bohrers eine Nebenschneide anschließt. Umfangseitig schließt sich an die Nebenschneide eine Rundschlifffase an, deren Breite mit zu den Hauptschneiden größer werdendem Abstand über eine definierte Länge zunimmt. Der Bohrer zeichnet sich dadurch aus, dass die Rundschlifffase ausgehend vom vorderen Bereich des Bohrers einen ersten Längsabschnitt mit einer ersten Breite und einen sich daran anschließenden zweiten Längsabschnitt mit einer zweiten Breite aufweist, wobei die Breite des ersten Längsabschnitts um ein Vielfaches kleiner ist als die Breite des zweiten Längsabschnitts. Dabei ist die Rundschlifffase durchgehend ausgebildet, das heißt sie erstreckt sich von der an der Bohrerspitze vorhandenen Kante, an der die Hauptschneide in die Nebenschneide übergeht beziehungsweise an diese angrenzt, in Richtung eines Befestigungsabschnitts, beispielsweise Schafts des Bohrers entlang der Nebenschneide, vorzugsweise über deren gesamte Länge, insbesondere zumindest aber über eine Länge des Bohrers, die gleich groß ist wie die definierte Arbeitstiefe des Bohrers.

Die Rundschlifffase ist also im vorderen Bereich des Bohrers, das heißt im Bereich ihres ersten Längsabschnitts, extrem schmal und weist vorzugsweise eine konstante oder im Wesentlichen konstante Breite auf. Diese Geometrie wirkt quasi so, als würde die Nebenschneide keine Rundschlifffase, sondern einen Freiwinkel aufweisen. Aufgrund der nur sehr kleinen Anlagekontaktfläche zwischen der Rundschlifffase im Bereich ihres ersten Längsabschnitts und der Bohrungswand ist der Verschleiß des Bohrers nur gering, so dass ohne weiteres höhere Standzeiten des Bohrers realisierbar sind. Trotzdem bewirken diese sehr schmalen Rundschlifffasen eine ausreichend hohe Abstützung und Führung und damit Stabilisierung der Schneidkanten des Bohrers, so dass exakte, eine hohe Oberflächengüte aufweisende Bohrungen herstellbar sind. Ferner schneidet der Bohrer aufgrund der im Bereich ihres ersten Längsabschnitts sehr schmalen Rundschlifffasen die Fasern in faserverstärkten Kunststoffen sehr zuverlässig ab, so dass eine Delamination der Schichten oder ein Ausfransen der Kanten eines derartige Fasern aufweisenden Kunststoffmaterials insbesondere auch im Bohreraustrittsbereich des Werkstücks vermieden werden kann.
Die Rundschlifffase weist in dem sich -in Richtung auf ein einen Befestigungsschaft beziehungsweise -abschnitt oder dergleichen des Bohrers gesehen- an den ersten Längsabschnitt anschließenden zweiten Längsabschnitt ebenfalls eine vorzugsweise konstante oder im Wesentlichen konstante Breite auf, die deutlich größer ist als die Breite der Rundschlifffasen an ihrem ersten Längsabschnitt, um den Bohrer optimal in der Bohrung abzustützen.
Der erfindungsgemäße Bohrer weist im Gegensatz zu dem bekannten Bohrer, der einen durchmesserkleineren Vorbohrabschnitt und einen den Fertigdurchmesser aufweisenden Feinbearbeitungsabschnitt besitzt, vorzugsweise nur einen einzigen, gleichbleibenden Bearbeitungsdurchmesser auf, was eine kostengünstige Herstellung des Bohrers ermöglicht.
Der erste, eine reduzierte Breite aufweisende Längsabschnitt der Rundschlifffasen wird im Folgenden auch kurz "Sichtfase" und der zweite, sich an die Sichtfase anschließende, eine größere Breite aufweisende zweite Längsabschnitt der Rundschlifffasen auch kurz nur "Rundschlifffase" genannt.

Ein erfindungsgemäßer Bohrer zeichnet sich dadurch aus, dass die Breite des ersten Längsabschnitts der Rundschlifffasen, also die Sichtfase, in einem Bereich von 0,01 mm bis 0,1 mm liegt. Es hat sich gezeigt, dass bei Sichtfasen mit einer Breite von 0,05 mm ein besonders gutes Arbeitsergebnis mit dem Bohrer erzielbar ist.

Besonders bevorzugt wird ein Ausführungsbeispiel des Bohrers, bei dem die Länge der Sichtfasen in einem Bereich von 1 mm bis 3 mm liegt. Die Sichtfasen sind also im Vergleich zur axialen Gesamterstreckung der Rundschlifffasen extrem kurz.

Nach einer Weiterbildung ist vorgesehen, dass der Bohrer zumindest im Bereich seiner Sichtfasen mit einer harten Beschichtung versehen ist und dass die Breite der im Wesentlichen ausschließlich der Durchmesserdefinition des Bohrers dienenden Sichtfasen dabei minimal ist und vorzugsweise ein technisch herstellbares Minimum beträgt. Es hat sich gezeigt, dass je schmaler die Sichtfasen sind, desto sicherer der Schnitt der im Bereich der Bohrung vorhandenen Fasern. Die Beschichtung kann beispielsweise eine Diamantbeschichtung sein, welche die Schneidkanten auch im schleifscharfen Zustand hinreichend gegen Abnützung/Verschleiß und Ausbrechen schützt.

Ein bevorzugtes Ausführungsbeispiel des Bohrers zeichnet sich dadurch aus, dass die Breite des zweiten Längsabschnitts der Rundschlifffasen in einem Bereich von 0,3 mm bis 0,8 mm liegt. Es hat sich gezeigt, dass eine Breite von 0,4 mm bis 0,7 mm besonders empfehlenswert ist. Der der Sichtfase nachfolgende Längsabschnitt der Rundschlifffase weist also eine deutlich größere Breite auf als die Breite der Sichtfase.

Bei einem weiteren bevorzugten Ausführungsbeispiel des Bohrers ist vorgesehen, dass der Übergang zwischen den ersten und zweiten Längsabschnitten der Rundschlifffasen als Stufe ausgebildet ist. Diese Stufe kann so ausbildet sein, dass der Übergang von der Sichtfase zum axial in Richtung des Bohrerschafts nachfolgenden zweiten Längsabschnitts an einer definierten axialen Position des Bohrers erfolgt, so dass sich eine im Wesentlichen Z-förmige Kantenkontur der Rundschlifffasen ergibt. Bei einem anderen Ausführungsbeispiel ist die den Übergang bildende Stufe bogenförmig ausgebildet. Dabei kann die in Draufsicht auf die Rundschlifffasen einen bogenförmigen Verlauf aufweisende Stufe durch eine vorzugsweise freigeschliffene Freifläche gebildet werden.

Bei einem weiteren bevorzugten Ausführungsbeispiel des Bohrers ist vorgesehen, dass die Nebenschneiden jeweils mit mindestens einer offenen Ausnehmung versehen sind. In dieser Ausnehmung können im Werkstück vorhandene Fasern quasi eingefangen und unmittelbar nachfolgend sicher durch die Nebenschneide abgeschnitten werden. Die Ausnehmungen können beispielsweise als Kerben ausgebildet sein, welche in die Nebenschneiden vorzugsweise geschliffen, gelasert oder erodiert werden.

Nach einer Weiterbildung ist vorgesehen, dass die Nebenschneiden jeweils mit mehreren, in einem Abstand voneinander angeordneten offenen Ausnehmungen versehen sind. Dadurch wird sichergestellt, dass, wenn im Werkstück vorhandene Fasern nicht in den in Vorschubrichtung des Bohrers gesehenen ersten Ausnehmungen gefangen und in dem zwischen benachbart angeordneten Ausnehmungen vorhandenen Nebenschneidenabschnitten abgeschnitten werden, dann von der nächsten oder übernächsten Ausnehmung eingefangen und nachfolgend abgeschnitten werden. Das Arbeitsergebnis des Bohrers kann daher weiter optimiert werden.

Bei einem bevorzugten Ausführungsbeispiel des Bohrers ist vorgesehen, dass die Längserstreckung der Ausnehmungen kleiner ist als die Breite der Rundschlifffasen im Bereich der Ausnehmungen. Hierdurch wird ein Einziehen der Fasern zwischen den Bohrer und der Bohrungswand, was ein Abreißen der Fasern zur Folge haben könnte, mit Sicherheit vermieden.

In bevorzugter Ausführungsform ist vorgesehen, dass die jeweils mindestens eine Ausnehmung an den Nebenschneiden im Bereich des zweiten Längsabschnitts der Rundschlifffasen, also nicht im Bereich der sehr schmalen Sichtfase angeordnet ist.

Weiterhin wird ein Ausführungsbeispiel des Bohrers bevorzugt, das durch einen Spitzenwinkel an der Querschneide beziehungsweise zwischen den Hauptschneiden von kleiner 90° gekennzeichnet ist. Durch diese Ausgestaltung des Bohrerendes kann eine üblicherweise an der Spitze des Bohrers auftretende Delamination vermieden werden.

Der Bohrer kann beispielsweise als Spiralbohrer oder als Bohrer mit parallel zur Längsmittelachse verlaufenden Nebenschneiden und gerade genuteten Spannuten ausgebildet sein.

Der Bohrer weist vorzugsweise zwei Hauptschneiden, zwei zugeordnete, gegebenenfalls wendelförmig verlaufende Nebenschneiden mit jeweils einer vorstehend beschriebenen Rundschlifffase auf. Denkbar ist jedoch auch, dass der Bohrer - wie oben dargelegt - lediglich eine Hauptschneide und nur eine dieser zugeordnete Nebenschneide mit anschließender, vorstehend beschriebener Rundschlifffase aufweist. Selbstverständlich können aber auch mehr als zwei, beispielsweise drei oder vier Hauptschneiden mit jeweils einer zugeordneten Nebenschneide mit sich daran anschließender Rundschlifffase vorgesehen werden.

Weitere vorteilhafte Ausgestaltungen des Bohrers ergeben sich aus den Unteransprüchen.

Die Erfindung wird im Folgenden anhand der Zeichnung näher erläutert. Es zeigen:
- Figur 1: in perspektivischer Darstellung einen Teil eines ersten Ausführungsbeispiels eines Bohrers von schräg vorne auf seine Spitze;
- Figur 2: eine weitere perspektivische Darstellung des Bohrers nach Figur 1 mit Draufsicht auf eine Nebenschneide;
- Figur 3: in perspektivischer Darstellung einen vergrößerten Ausschnitt des Bohrers nach den Figuren 1 und 2 im Bereich seiner Spitze mit Blickrichtung auf die Nebenschneide und
- Figur 4: in perspektivischer Darstellung einen Teil eines zweiten Ausführungsbeispiels eines Bohrers von schräg vorne auf seine Spitze.

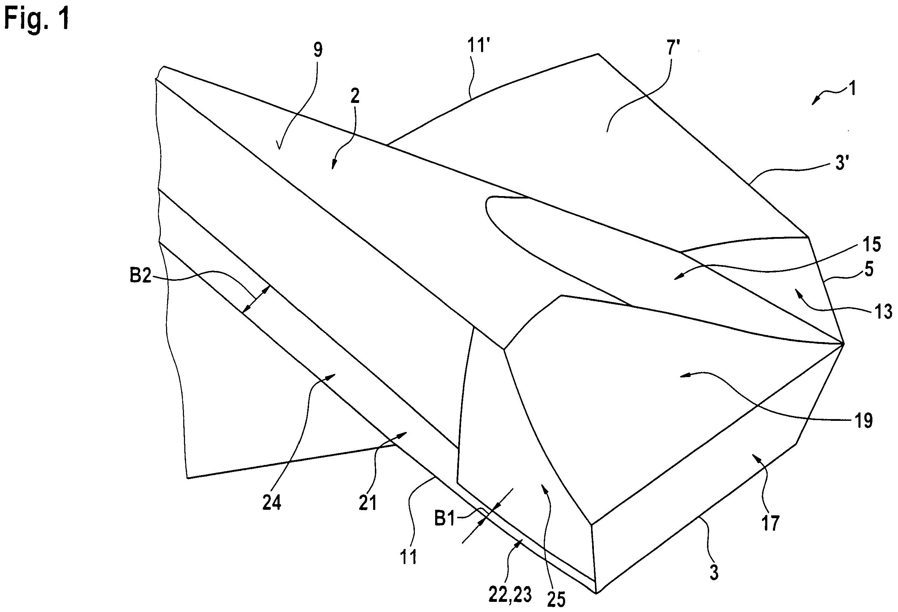

In Figur 1 ist in perspektivischer Darstellung ein Ausschnitt eines ersten Ausführungsbeispiels eines Bohrers 1 dargestellt. Die Blickrichtung ist von schräg vorne oben auf die Spitze des Bohrers 1.

Der Bohrer 1 ist bei dem hier dargestellten Ausführungsbeispiel als Spiralbohrer ausgebildet und weist einen Grundkörper 2 auf, an dem eine erste Hauptschneide 3 und eine punktsymmetrisch zur Mittelachse des Bohrers 1 angeordnete zweite Hauptschneide 3' vorgesehen sind. Die beiden Hauptschneiden 3, 3' werden bei diesem Ausführungsbeispiel vorzugsweise durch eine durch die Mittelachse verlaufende Querschneide 5 miteinander verbunden. Die beiden Hauptschneiden 3, 3' sind -in Draufsicht auf eine Stirnseite des Bohrers 1 gesehen- vorzugsweise parallel zu einer durch die Mittelachse verlaufende Durchmesserlinie angeordnet. Die Hauptschneiden weisen einen im Allgemeinen als Spitzenwinkel bezeichneten Winkel zueinander auf, der kleiner 90° ist. Das die Hauptschneiden aufweisende Ende des Bohrers ist daher relativ spitz.

Den Hauptschneiden 3, 3' ist jeweils eine Spanfläche zugeordnet, von denen in der Darstellung gemäß Figur 1 lediglich die der zweiten Hauptschneide 3' zugeordnete Spanfläche 7' sichtbar ist. Die Spanflächen weisen einen positiven Spanwinkel auf, das heißt, sie fallen in Drehrichtung des Bohrers zurück, so dass sich ein ziehender Schnitt ergibt. Bei einer Drehung des Bohrers 1, welche -in Draufsicht auf seine Stirnseite gesehen- entgegen dem Uhrzeigersinn erfolgt, bewegt sich die Hauptschneide 3' aus der Bildebene der Figur 1 heraus, während die andere Hauptschneide 3 in die Bildebene hinein verlagert wird.

Die Hauptschneiden 3, 3' gehen in im Bereich der Umfangsfläche 9 des Bohrers 1 angeordnete Nebenschneiden 11 und 11' über. Die Nebenschneiden 11 und 11' sind bei gerade genuteten Bohrern im Wesentlichen parallel zur Mittelachse des Bohrers ausgerichtet und verlaufen aber bei dem dargestellten Ausführungsbeispiel entlang einer gedachten Schraubenlinie.

Im Bereich der Querschneide 5 ergeben sich schlechte Schneideigenschaften des Bohrers 1, so dass diese möglichst kurz sein sollte.

Dies wird durch eine Ausspitzung 13 erreicht, die vorzugsweise durch eine besondere Anschlifftechnik hergestellt wird. Aufgrund der hierdurch verkleinerten/verkürzten Querschneide werden die Vorschubkraft und damit das Bohrmoment verringert.

Im Bereich des stirnseitigen Endes des Bohrers sind weitere Freiflächen 15, 17 und 19 vorgesehen, auf die hier jedoch nicht näher eingegangen wird.

An die Nebenschneiden 11 und 11' schließt sich umfangsseitig jeweils eines Rundschlifffase an, von denen in der Darstellung gemäß Figur 1 lediglich die der Nebenschneide 11 zugeordnete Rundschlifffase 21 erkennbar ist. Die Rundschlifffasen der Nebenschneiden 11 und 11' sind identisch ausgebildet, so dass im Folgenden lediglich die Rundschlifffase 21 näher erläutert wird.

Die Rundschlifffase 21 ist bei diesem Ausführungsbeispiel durchgehend ausgebildet und erstreckt sich vom vorderen Ende der Nebenschneide 11 in Richtung eines nicht dargestellten Schaftes des Bohrers 1. Die Rundschlifffase 21 weist ausgehend vom vorderen Bereich des Bohrers einen ersten Längsabschnitt 22 mit einer ersten Breite B1 und einen sich daran anschließenden zweiten Längsabschnitt 24 mit einer zweiten Breite B2 auf. Es ist ohne weiteres ersichtlich, dass die Breite B1 des ersten Längsabschnitts 22 deutlich, nämlich um ein Vielfaches kleiner ist als die Breite B2 des zweiten Längsabschnitts 24 der Rundschlifffase 21.

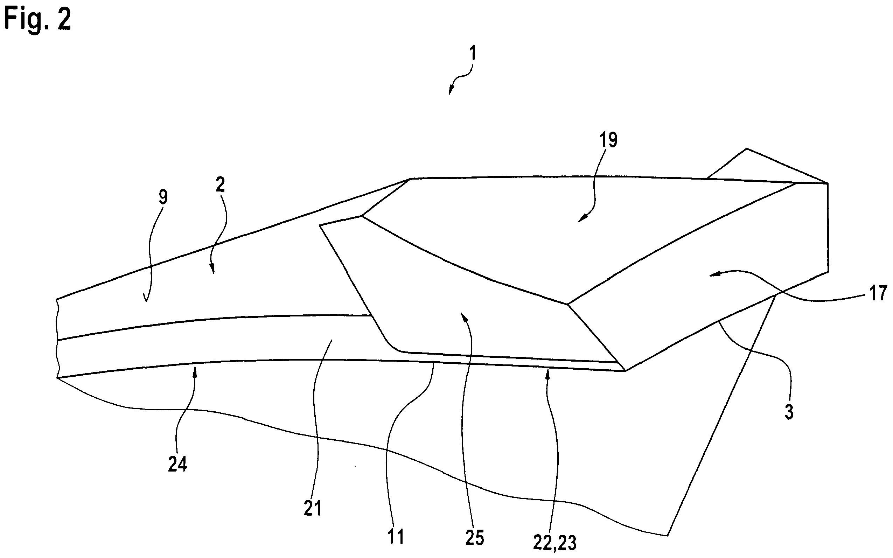

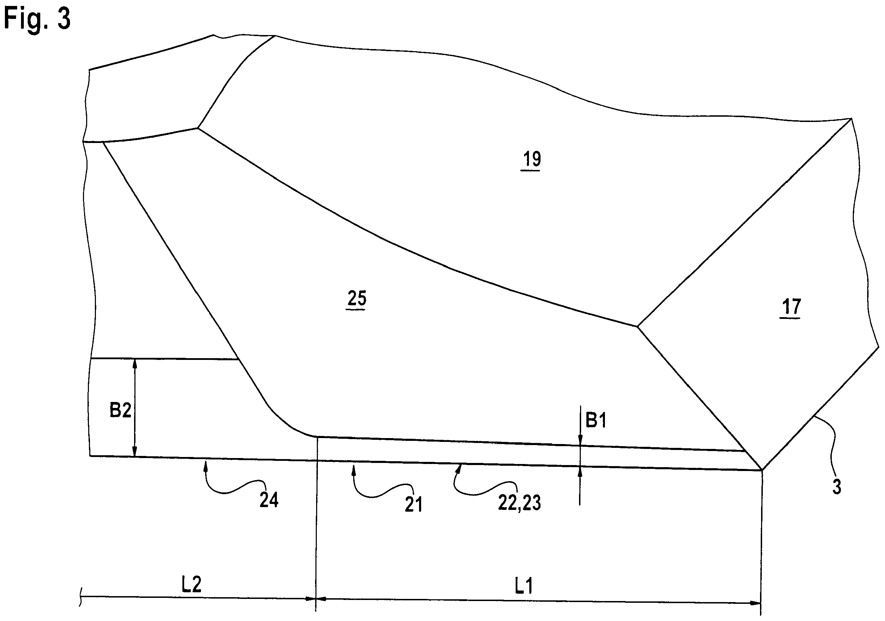

Der erste Längsabschnitt 22 der Rundschlifffase 21 mit der Breite B1 wird im Folgenden aufgrund seiner nur geringen Breite auch als reduzierte Rundschlifffase oder auch Sichtfase 23 bezeichnet. Die Sichtfase 23 weist einen Radius auf, der dem Radius der zu erstellenden Bohrung, also dem Bearbeitungsdurchmesser des Bohrers 1, entspricht. Die unterschiedliche Breite der Rundschlifffase 21 in deren vorstehend beschriebenen Längsabschnitten ist bei dem in den Figuren dargestellten Ausführungsbeispiel durch eine vorzugsweise durch einen Freischliff hergestellte Freifläche 25 im Bereich des ersten Längsabschnitts 22 gebildet. Dabei erstreckt sich die Freifläche 25 bis an die Umfangsfläche 9 des Bohrers 1 und grenzt dabei an die Freiflächen 17 und 19 an. Der Verlauf der Freifläche 25 ist so gewählt, dass diese während eines Bohrvorgangs die Bohrungswand nicht berührt.
Wie aus Figur 2 ersichtlich, die eine weitere perspektivische Darstellung eines endseitigen Bereichs des Bohrers 1 nach Figur 1 zeigt, ist der Übergang zwischen der Sichtfase 23 und dem zweiten Längsabschnitt 24 der Rundschlifffase 21 gestuft ausgebildet, wobei die Sichtfase 23 in einem bogenförmigen Verlauf in den zweiten Längsabschnitt 24 übergeht. Der Übergang ist hier besonders sanft und ohne einen Knick. Diese Form des Übergangs ergibt sich beim Einschleifen der Freifläche 25 aufgrund des Schliffs im Zusammenhang mit der Größe, Kontur und Geometrie des Bohrers 1 ohne weiteres. Im Folgenden werden anhand der Figur 3, die in vergrößerter Darstellung einen Ausschnitt des Bohrers nach den Figuren 1 und 2 zeigt, die Abmessungen der Rundschlifffase 21 näher erläutert.

Die Breite B1 des ersten Längsabschnitts 22 liegt in einem Bereich 0,01 mm bis 0,1 mm und beträgt insbesondere circa 0,05 mm. Dabei ist die Länge L1 des ersten Längsabschnitts 22 der Rundschlifffasen 21 extrem kurz und liegt vorzugsweise in einem Bereich von 1 mm bis 3 mm. Demgegenüber weist der zweite Längsabschnitt 24 eine deutlich vergrößerte Breite B2 auf, die in einem Bereich von 0,3 mm bis 0,8 mm liegt. Der zweite Längsabschnitt 24 erstreckt vorzugsweise über den an die Sichtfase 23 anschließenden übrigen Bereich der Nebenschneide.

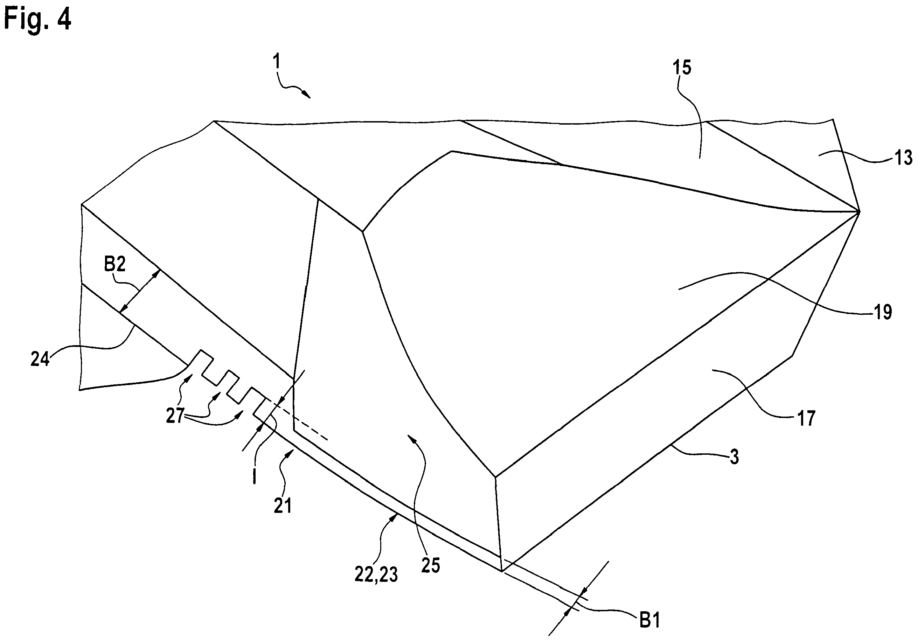

Figur 4 zeigt ein weiteres Ausführungsbeispiel eines Bohrers 1 in perspektivischer Darstellung. Diese Ansicht entspricht im Wesentlichen der perspektivischen Darstellung gemäß Figur 1. Gleiche und funktionsgleiche Teile sind mit gleichen Bezugsziffern versehen, sodass auf die Beschreibung zu den vorangegangenen Figuren 1 bis 3 verwiesen wird.

Bei dem besonders bevorzugten, in Figur 4 dargestellten Ausführungsbeispiel des Bohrers 1 ist vorgesehen, dass die Nebenschneiden 11 und 11' mit jeweils mindestens einer offenen Ausnehmung 27 versehen sind. Bei dem Ausführungsbeispiel nach Figur 4 weisen die Nebenschneiden 11 und 11' jeweils mehrere, hier insgesamt drei in einem Abstand voneinander angeordnete, offene Ausnehmungen 27 auf.

Die Ausnehmungen 27 sind als Kerben ausgebildet, die bei diesem Ausführungsbeispiel rein beispielhaft eine rechteckige Kontur aufweisen. Sie werden durch schleifen, lasern und/oder Erodieren hergestellt. Es ist ohne weiteres möglich, eine andere Kontur für die Ausnehmungen 27 vorzusehen. Sie können beispielsweise auch V-förmig ausgebildet sein oder sonstige Formen aufweisen. Wichtig ist, dass die Längserstreckung I der Ausnehmungen 27 kleiner ist als die Breite der Rundschlifffase 21; die Ausnehmungen 27 erstrecken sich also nicht über die gesamte Breite B2 der Rundschliffachse 21. Bei dem hier dargestellten Ausführungsbeispiel des Bohrers 1 sind die Ausnehmungen 27 im Bereich des zweiten Längsabschnitts 24 der Rundschlifffase 21 angeordnet, das heißt, die Längserstreckung der Ausnehmungen 27 ist kleiner als 0,3 mm, sie beträgt hier circa 0,15 mm. Die Ausnehmungen 27 müssen letztlich zumindest so lang sein, dass vom Werkstück abstehende Fasern eines bearbeiteten Werkstücks in den Ausnehmungen 27 eingefangen und nachfolgend von dem einer Ausnehmungen 27 in axialer Richtung folgenden, gegebenenfalls zwischen zwei Ausnehmungen vorhandenen Teilbereich der Nebenschneide 21 abgeschnitten werden.

Zusammenfassend bleibt festzuhalten, dass beim Bohren von faserverstärkten Kunststoff umfassenden Werkstücken, aber auch von Werkstücken die aus Verbundwerkstoff bestehen und von Werkstücken, die ganz am faserverstärktem Kunststoff bestehen, wenigstens eine Schicht aus faserverstärktem Kunststoff sowie eine Metallschicht, beispielsweise aus Aluminium umfassen, mittels der anhand der Figuren beschriebenen Bohrer eine Delamination sowie ausgefranste Bearbeitungskanten, insbesondere beim Bohrungsdurchbruch, vermieden werden können. Werden also Verbundwerkstoffe aus faserverstärktem Kunststoff und Metall, also Werkstücke mit Sandwichaufbau, bearbeitet, ergeben sich die hier beschriebenen Vorteile gerade dann, wenn auf der Austrittsseite der Bohrung in einem derartigen Werkstück faserverstärkter Kunststoff vorhanden ist. Vorteilhaft ist ferner, dass sehr genaue Bohrungen mit guten Oberflächen erzeugt werden können. Dies wird insbesondere durch die sehr schmale, sich nur über eine kleine axiale Länge von vorzugsweise circa 1,0 mm bis 3,0 mm erstreckende Sichtfase 23 erreicht. Dadurch, dass die Sichtfase sehr schmal ausgebildet ist, schneidet der Bohrer die Fasern in faserverstärkten Kunststoffen sehr zuverlässig ab, wobei die an der Bohrungswand entlanggleitende und dadurch die Bohrerschneiden stabilisierende Sichtfase nur einem geringen Verschleiß unterliegt. Besonders gute Ergebnisse haben sich ergeben, wenn neben der speziellen Ausgestaltung der Rundschlifffasen der Bohrer dabei einen Spitzenwinkel von kleiner 90° aufweist. Durch diesen kleinen Spitzenwinkel zwischen den Hauptschneiden wird sichergestellt, dass die auf den Bohrer wirkenden resultierenden Kraftkomponenten in axialer Richtung möglichst klein sind.

## Patentansprüche

1. Bohrer (1) zur Herstellung einer Bohrung in faserverstärkten Kunststoff aufweisenden Werkstücken mit
- mindestens einer stirnseitigen Hauptschneide (3),
- mindestens einer im Bereich einer Umfangsfläche (9) des Bohrers (1) vorgesehenen Nebenschneide (11), und mit
- umfangseitig an die mindestens eine Nebenschneide (11,11') anschließenden Rundschlifffasen (21), wobei
- die durchgehenden Rundschlifffasen (21) ausgehend von einem vorderen Bereich des Bohrers (1) einen ersten Längsabschnitt (22) mit einer ersten Breite (B1) und einen sich daran anschließenden zweiten Längsabschnitt (24) mit einer zweiten Breite (B2) aufweisen, wobei die Breite (B1) des ersten Längsabschnitts (22) um ein Vielfaches kleiner ist als die Breite (B2) des zweiten Längsabschnitts (24),
**dadurch gekennzeichnet, dass**
- die Breite (B1) des ersten Längsabschnitts (22) der Rundschlifffasen (21) in einem Bereich von 0,01 mm bis 0,1 mm liegt.

2. Bohrer nach Anspruch 1, **dadurch gekennzeichnet, dass** die Breite (B1) des ersten Längsabschnitts (22) der Rundschlifffasen (21) 0,05 mm beträgt.

3. Bohrer nach Anspruch 1 oder 2, **dadurch gekennzeichnet, dass** mindestens zwei Hauptschneiden (3,3') und mindestens zwei Nebenschneiden (11,11') vorgesehen sind, wobei jeder Hauptschneide eine Nebenschneide zugeordnet ist.

4. Bohrer nach einem der vorhergehenden Ansprüche, **dadurch gekennzeichnet, dass** der Bohrer (1) zumindest im Bereich des ersten Längsabschnitts (22) der Rundschlifffasen mit einer harten Beschichtung, vorzugsweise Diamantbeschichtung, versehen ist.

5. Bohrer nach einem der vorhergehenden Ansprüche, **dadurch gekennzeichnet, dass** die Breite (B2) des zweiten Längsabschnitts (24) der Rundschlifffasen (21) in einem Bereich von 0,3 mm bis 0,8 mm, vorzugsweise von 0,4 mm bis 0,7 mm, liegt.

6. Bohrer nach einem der vorhergehenden Ansprüche, **dadurch gekennzeichnet, dass** die Länge (L1) des ersten Längsabschnitts (22) der Rundschlifffasen (21) in einem Bereich von 1 mm bis 3 mm liegt.

7. Bohrer nach einem der vorhergehenden Ansprüche, **dadurch gekennzeichnet, dass** die Breite (B1;B2) des ersten Längsabschnitts (22) und/oder des zweiten Längsabschnitts (24) der Rundschlifffasen (21) über ihre/seine Länge konstant oder im Wesentlichen konstant ist.

8. Bohrer nach einem der vorhergehenden Ansprüche, **dadurch gekennzeichnet, dass** der Übergang zwischen den ersten und zweiten Längsabschnitten (22,24) der Rundschlifffasen (21) als Stufe ausgebildet ist.

9. Bohrer nach einem der vorhergehenden Ansprüche, **dadurch gekennzeichnet, dass** die Nebenschneiden (11,11') jeweils mit mindestens einer offenen Ausnehmung (27), insbesondere Kerbe, versehen sind.

10. Bohrer nach Anspruch 9, **dadurch gekennzeichnet, dass** die Nebenschneiden (11,11') jeweils mit mehreren, in einem Abstand voneinander angeordneten randoffenen Ausnehmungen (27) versehen sind.

11. Bohrer nach Anspruch 9 oder 10, **dadurch gekennzeichnet, dass** die Längserstreckung der Ausnehmungen (27) kleiner ist als die Breite (B2) der Rundschlifffasen (21) im Bereich der Ausnehmungen (27).

12. Bohrer nach einem der Ansprüche 9 bis 11, **dadurch gekennzeichnet, dass** die jeweils mindestens eine Ausnehmung (27) an den Nebenschneiden (11,11') im Bereich des zweiten Längsabschnitts (24) der Rundschlifffasen (21) angeordnet ist.

13. Bohrer nach einem der vorhergehenden Ansprüche, **gekennzeichnet durch** einen Spitzenwinkel an der Querschneide (5), der kleiner 90° ist.

## Claims

1. A drill (1) for producing a borehole in workpieces comprising fiber-reinforced plastic, having
- at least one main cutting edge (3) on the front end,
- at least one secondary cutting edge (11) provided in the area of the peripheral face (9) of the drill (1), and having
- circular grinding chamfers (21) following the at least one secondary cutting edge (11, 11') on the peripheral side, wherein
- the continuous circular grinding chamfers (21) have, starting from a forward area of the drill (1), a first longitudinal section (22) with a first width (B1) and a secondary longitudinal section (24) with a second width (B2) following thereto, wherein the width (B1) of the first longitudinal section (22) is by many times smaller than the width (B2) of the second longitudinal section (24)
**characterized in that**
- the width (B1) of the first longitudinal section (22) of the circular grinding chamfers (21) is in a range from 0.01 mm to 0.1 mm.

2. The drill according to claim 1, **characterized in that** the width (B1) of the first longitudinal section (22) of the circular grinding chamfers (21) is 0.05 mm.

3. The drill according to claim 1 or 2, **characterized in that** at least two main cutting edges (3, 3') and at least two secondary cutting edges (11, 11') are provided, a secondary cutting edge being allocated to each main cutting edge.

4. The drill according to any one of the preceding claims, **characterized in that** the drill (1) is provided with a hard coating, preferably diamond coating, at least in the area of the first longitudinal section (22) of the circular grinding chamfers.

5. The drill according to any one of the preceding claims, **characterized in that** the width (B2) of the second longitudinal section (24) of the circular grinding chamfers (21) is in a range from 0.3 mm to 0.8 mm, preferably from 0.4 mm to 0.7 mm.

6. The drill according to any one of the preceding claims, **characterized in that** the length (L1) of the first longitudinal section (22) of the circular grinding chamfers (21) is in a range from 1 mm to 3 mm.

7. The drill according to any one of the preceding claims, **characterized in that** the width (B1, B2) of the first longitudinal section (22) and/or of the second longitudinal section (24) of the circular grinding chamfers (21) is constant or essentially constant over its/their length.

8. The drill according to any one of the preceding claims, **characterized in that** the transition between the first and second longitudinal sections (22, 24) of the circular grinding chamfers (21) is designed as a step.

9. The drill according to any one of the preceding claims, **characterized in that** the secondary cutting edges (11, 11') are each provided with at least one open recess (27), in particular with a notch.

10. The drill according to claim 9, **characterized in that** the secondary cutting edges (11, 11') are each provided with multiple recesses (27) that are open at the edges and are arranged at a distance from one another.

11. The drill according to claim 9 or 10, **characterized in that** the longitudinal extent of the recesses (27) is smaller than the width (B2) of the circular grinding chamfers (21) in the area of the recesses (27).

12. The drill according to any one of claims 9 to 11, **characterized in that** the at least one recess (27) each is arranged on the secondary cutting edges (11, 11') in the area of the second longitudinal section (24) of the circular grinding chamfers (21).

13. The drill according to any one of the preceding claims, **characterized by** a point angle on the chisel edge (5) which is less than 90°.

## Revendications

1. Foret (1) pour fabriquer un alésage dans des pièces contenant de la matière plastique renforcée de fibres, avec
- au moins un tranchant principal (3) du côté frontal,
- au moins un tranchant auxiliaire (11) prévu dans la région d'une surface périphérique (9) du foret (1), et avec
- des chanfreins de rectification cylindrique (21) contiguës à l'au moins un tranchant auxiliaire (11, 11') sur le côté périphérique, dans lequel
- les chanfreins de rectification cylindrique (21) continues présentent, à partir d'une zone arrière du foret (1), une première portion longitudinale (22) avec une première largeur (B1), et contiguë à celle-ci, une seconde portion longitudinale (24) avec une seconde largeur (B2), la largeur (B1) de la première portion longitudinale (22) étant plusieurs fois inférieure à la largeur (B2) de la seconde portion longitudinale (24),
**caractérisé en ce que**
- la largeur (B1) de la première portion longitudinale (22) des chanfreins de rectification cylindrique (21) est dans une plage de 0,01 mm à 0,1 mm.

2. Foret selon la revendication 1, **caractérisé en ce que** la largeur (B1) de la première portion longitudinale (22) des chanfreins de rectification cylindrique (21) est 0,05 mm.

3. Foret selon la revendication 1 ou 2, **caractérisé en ce qu'**ils sont prévus au moins deux tranchants principaux (3, 3') et au moins deux tranchants auxiliaires (11, 11'), chaque tranchant principal étant associé avec un tranchant auxiliaire.

4. Foret selon l'une quelconque des revendications précédentes, **caractérisé en ce que** le foret (1) est prévu, au moins dans la région de la première portion longitudinale (22) des chanfreins de rectification cylindrique, avec un revêtement dur, de préférence un revêtement en diamant.

5. Foret selon l'une quelconque des revendications précédentes, **caractérisé en ce que** la largeur (B2) de la seconde portion longitudinale (24) des chanfreins de rectification cylindrique (21) est dans une rangée de 0,3 mm à 0,8 mm, de préférence de 0,4 mm à 0,7 mm.

6. Foret selon l'une quelconque des revendications précédentes, **caractérisé en ce que** la longueur (L1) de la première portion longitudinale (22) des chanfreins de rectification cylindrique (21) est dans une rangée de 1 mm à 3 mm.

7. Foret selon l'une quelconque des revendications précédentes, **caractérisé en ce que** la largeur (B1; B2) de la première portion longitudinale (22) et/ou de la seconde portion longitudinale (24) des chanfreins de rectification cylindrique (21) sont constantes ou sensiblement constantes sur toutes ses longueurs.

8. Foret selon l'une quelconque des revendications précédentes, **caractérisé en ce que** la jonction entre la première et seconde portion longitudinale (22, 24) des chanfreins de rectification cylindrique (21) est configurée sous forme d'un gradin.

9. Foret selon l'une quelconque des revendications précédentes, **caractérisé en ce que** les tranchants auxiliaires (11, 11') respectivement sont prévus d'au moins un évidement ouvert (27), notamment d'une encoche.

10. Foret selon la revendication 9, **caractérisé en ce que** les tranchants auxiliaires (11, 11') respectivement sont prévus avec plusieurs évidements (27) à bord ouvert espacés l'un de l'autre.

11. Foret selon la revendication 9 ou 10, **caractérisé en ce que** l'extension longitudinale des évidements (27) est inférieure à la largeur (B2) des chanfreins de rectification cylindrique (21) dans la région des évidements (27).

12. Foret selon l'une quelconque des revendications 9 à 11, **caractérisé en ce que** chaque au moins un évidement (27) au niveau des tranchants auxiliaires (11, 11') est disposé dans la région de la seconde portion longitudinale (24) des chanfreins de rectification cylindrique (21).

13. Foret selon l'une quelconque des revendications précédentes, **caractérisé par** un angle de pointe au niveau du tranchant transversale (5) qui est inférieur à 90°.
